# DEMANDE DE BREVET EUROPEEN

(11) **EP 3 219 540 A1**
(43) Date de publication de la demande: **20.09.2017**
(21) Numéro de dépôt: 17160225.3
(22) Date de dépôt: 10.03.2017
(51) Int. Cl.: B60P 1/00, B60P 1/44, B60P 1/02

(54) **VÉHICULE LÉGER DE TAILLE RÉDUITE POUR LE TRANSPORT DE MARCHANDISE AVEC TRANSFERT AU SOL**

(30) Priorité: 14.03.2016 FR 1652106
(71) Demandeur: Central Design, 44100 Nantes (FR)
(72) Inventeur: FOURNIER, Frédéric, 17100 Fontcouverte (FR)
(74) Mandataire: Tournel, Jean Louis

(57) **Abrégé**

L'invention a pour objet un véhicule comportant un plateau (2) pour accueillir une charge et un moyen pour amener la charge au sol, ce véhicule étant caractérisé en ce que le plateau (2) est porté par un support(5) mobile verticalement et aussi en translation se déplaçant entre une première position où le plateau (2) est au-dessus du châssis du véhicule et une seconde position où le support (5) et le plateau (2) se positionnent en dehors de la zone occupée par le châssis, le plateau étant relié au support par des moyens de déplacement vertical du plateau vers le sol.

## Description

L'invention se rapporte à un véhicule léger de transport de marchandises qui permets le chargement de marchandise contenue dans un camion ou dans un lieu de stockage, transférer la dite marchandise en un lieu distant du camion ou du lieu de stockage et déposer au sol la marchandise qu'il transporte.

A ce jour, pour déposer la marchandise au sol contenue dans un véhicule, on équipe le dit véhicule d'une plateforme arrière qui par un jeu de biellettes se positionne dans le prolongement du plancher de charge du véhicule pour ensuite être descendu sur le sol afin de charger ou décharger le véhicule. La plateforme doit rester le plus horizontal possible pendant son parcours de bas en haut et de haut en bas. Cette plateforme doit également être rangée lorsque le véhicule se déplace sur les routes.

Le transporteur déplace alors la marchandise située sur le plancher du camion vers la plateforme puis abaisse celle-ci pour atteindre le sol et déplace alors sa marchandise avec un transpalette pour l'acheminer éventuellement vers un plus petit véhicule qui servira à la distribution finale. Ce plus petit véhicule doit également être pourvu d'une plateforme arrière qui pour des petits véhicules devient encombrante par rapport au plancher disponible du véhicule.

On connait des camions EP-A-715 986 ou US2010/0329831 qui, au lieu de plateforme articulée comportent au dessus du plancher des rails télescopiques permettant de déplacer un plateau porte charge afin de transférer la marchandise au sol. Au dessus du plancher de la caisse du camion ont été fixés les rails télescopiques et sur ces rails se déplacent un plateau qui peut se positionner totalement au delà du bord arrière du camion et être abaissé au sol. Il s'agit là d'un camion type 15 tonnes et d'une plateforme relativement petite par rapport à la surface totale.

Le poids du camion est suffisant pour éviter le basculement de la charge lorsque le plateau est situé complément à l'arrière. Ce type d'engin ne peut circuler sur certaines routes étroites et il est classiquement équipé d'un moteur diesel. Il ne s'agit pas d'un véhicule léger pour distribuer de la marchandise dans des zones réservée au petit véhicule.

L'invention vise un véhicule léger et de petite taille pour transporter de la marchandise contenue dans un camion vers un lieu éloigné où cette marchandise est déposé au sol ou inversement.

L'invention vise à proposer un véhicule approprié.

A cet effet, l'invention se rapporte à un véhicule léger et de taille réduite comportant un plateau pour accueillir une charge et un moyen pour amener la charge au sol, ce véhicule étant caractérisé en ce que d'une part le plateau est relié au châssis par un support mobile verticalement par un système de manoeuvre verticale pour positionner le plateau à la hauteur du plateau d'un camion ou d'un quai de chargement et d'autre part le plateau est mobile en translation horizontal par rapport au support pour se déplacer d'une position de transport située au-dessus du châssis du véhicule et une seconde position de transfert où le plateau après avoir coulissé vers l'arrière pour se positionner en déport arrière par rapport à la position de transport peut être déplacer vers le sol.

L'invention sera bien comprise à l'aide de la description ci-après faite à titre d'exemple non limitatif en regard du dessin qui représente :
FIG 1 un véhicule selon l'invention
FIG 2 Cinématique d'une reprise de charge

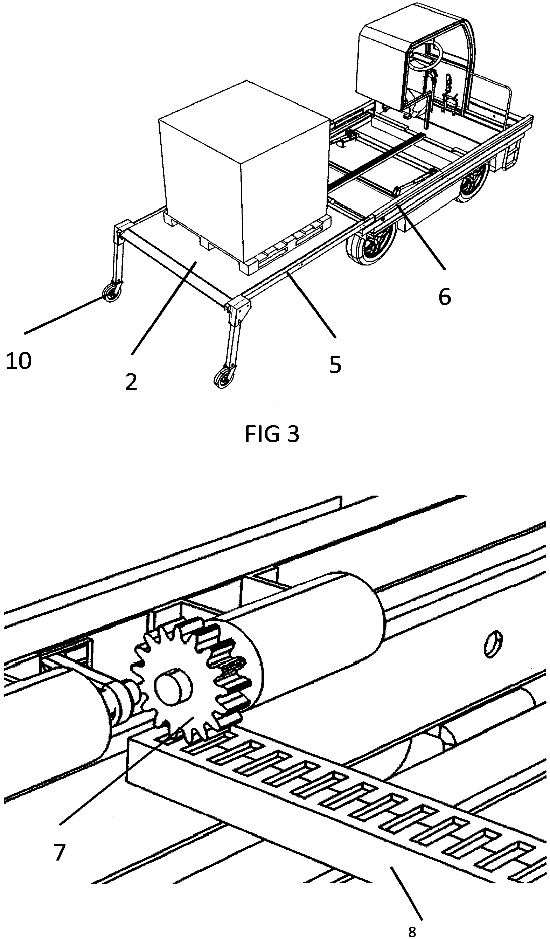

FIG 3 une étape de déplacement de la marchandise
FIG 4 un détail de construction
FIG 5 cinématique de déplacement de la marchandise du haut vers le bas
FIG 6 détail de construction pour le déplacement vertical de la marchandise

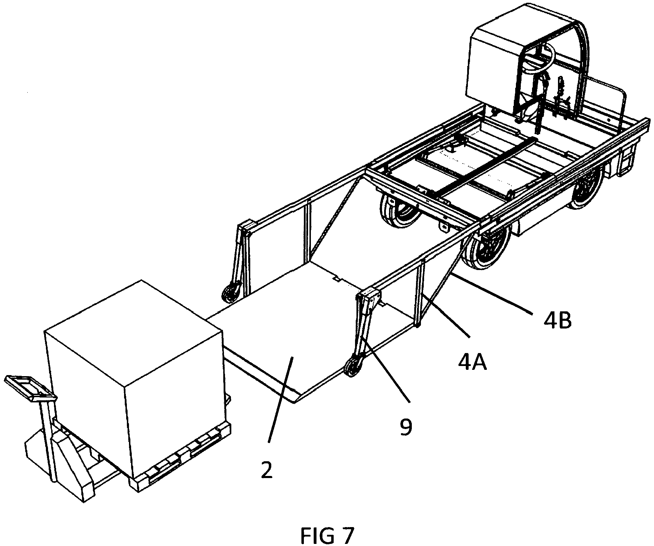

FIG 7 : le véhicule déchargé
FIG 8 une variante du système de la figure 2
FIG 9 un détail agrandi de la figure 8

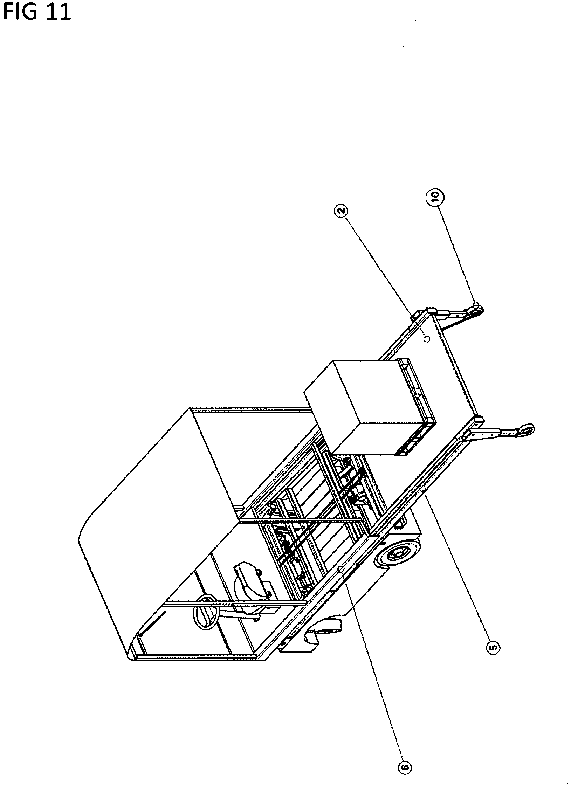

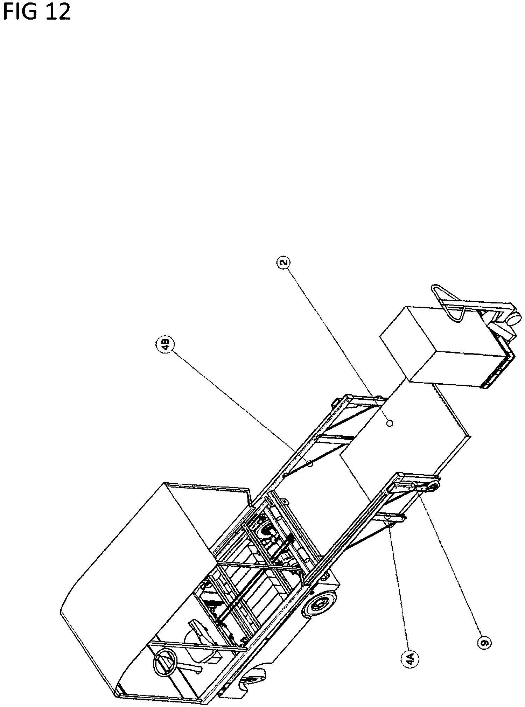

FIG 10 à 12 une variante de la navette.
FIG 13 l'arrière de la navette sans le plateau

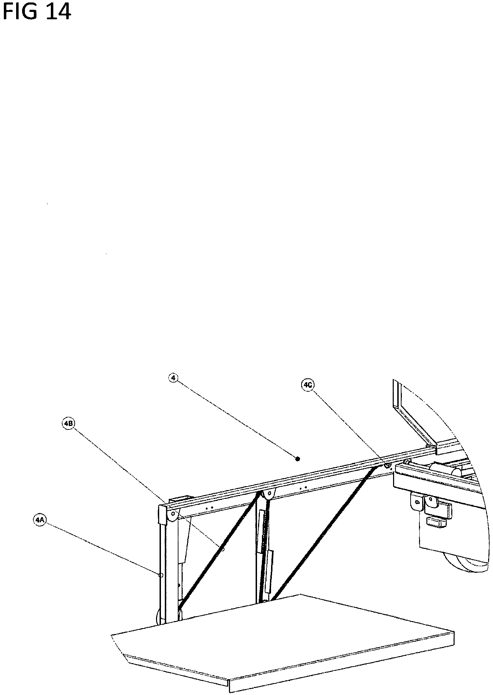

FIG 14 Un mécanisme d'entrainement du plateau pour l'amener au sol

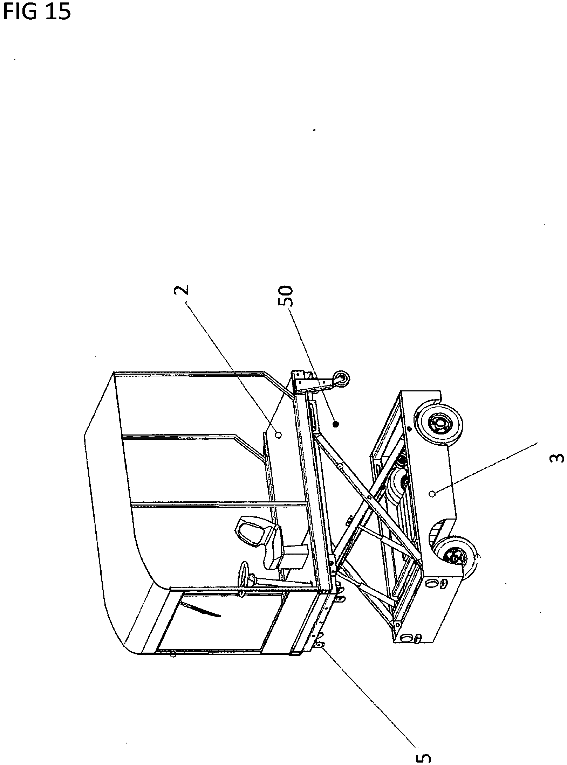

FIG 15 la navette en position haute

En se reportant au dessin on voit un véhicule 1 de petite taille léger destiné à transporter des marchandises dans des zones à accès réglementés.

Ces zones peuvent être, par exemple, interdites aux véhicules à moteur à explosion et aux véhicules lourds .

Ici le véhicule sera non polluant du type à propulsion électrique par exemple

Ce véhicule comprend un plateau 2 pour accueillir une charge. Ce plateau est porté par un châssis 3 qui supporte en outre les batteries qui vont permettre d'alimenter le système de propulsion électrique du véhicule. Ce véhicule pourrait être cependant un véhicule à moteur à explosion utilisant du carburant GPL ou du biocarburant.

Le véhicule comprend un moyen 4 pour amener la charge disposée sur le plateau au sol. Le plateau reste parallèle au plan d'appui du véhicule c'est-à-dire horizontal si le sol est horizontal.

Avantageusement d'une part le plateau 2 est relié au châssis 3 par un support 5 mobile verticalement par un système 50 de manoeuvre verticale pour positionner le plateau à la hauteur du plateau d'un camion et d'autre part le plateau 2 est mobile en translation horizontal par rapport au support 5 pour se déplacer entre une première position de transport située au-dessus du châssis du véhicule et une seconde position dite de transfert où le plateau après avoir coulissé vers l'arrière pour se positionner en déport arrière par rapport à la position de transport peut être déplacé vers le sol.

Le support 5 est porté par un système de manoeuvre vertical 50 permettant de positionner le plateau à la hauteur du plancher du camion pour transférer les marchandises du camion vers le plateau ou vis et versa. Ce système est, par exemple, une structure articulée en X avec un moyen moteur modifiant l'angle formé par les branches du X.

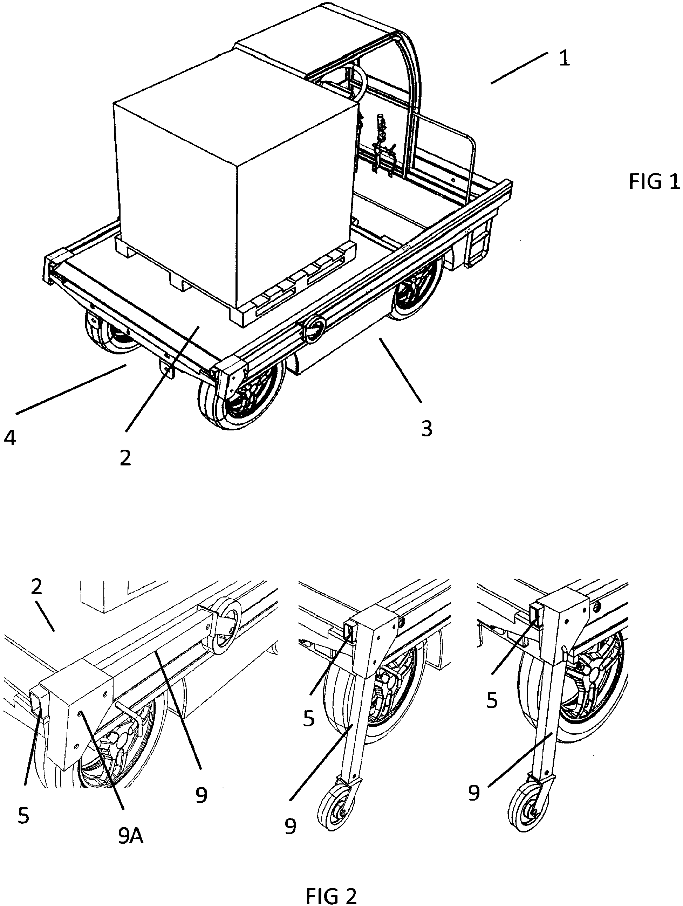

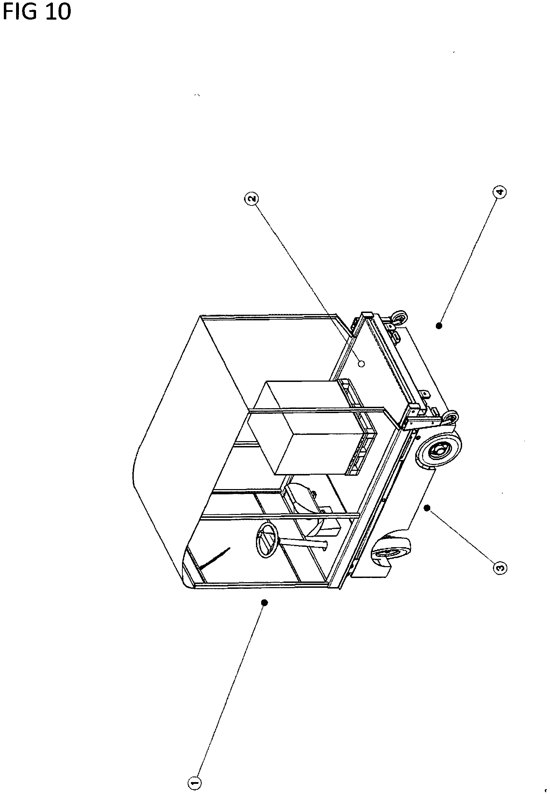

On note que le support 5 porte à l'arrière le plateau pour la charge à transporter et à l'avant le poste de pilotage. Dans la version de la figure 1 la cabine de conduite est fixe et le support 5 qui forme un cadre présente une découpe pour se déplacer verticalement sans être gêner par la cabine de conduite. Pour la navette de la figure 10 et suivante le support 5 porte la cabine et les éléments de conduite sont reliés par des moyens hydrauliques ou électriques au moteur et les accessoires de sorte que lorsqu'on lève le support 5 on lève aussi la cabine qui est mobile verticalement..Le conducteur peut ainsi plus facilement avoir accès au plateau pour charger ou décharger.

Le plateau passe ensuite d'une position centrée sur le châssis à une position décentrée pour être descendu au sol.

Le support 5 comprend des guides 6 latéraux télescopiques qui s'étendent selon l'axe longitudinal du véhicule. Le plateau 2 est guidé en translation sur les dits guides latéraux .

Ces guides 6 sont localisés au niveau des bords longitudinaux. Ces guides sont par exemple des profils ouverts dans lequel circule des chariots portés par le plateau.

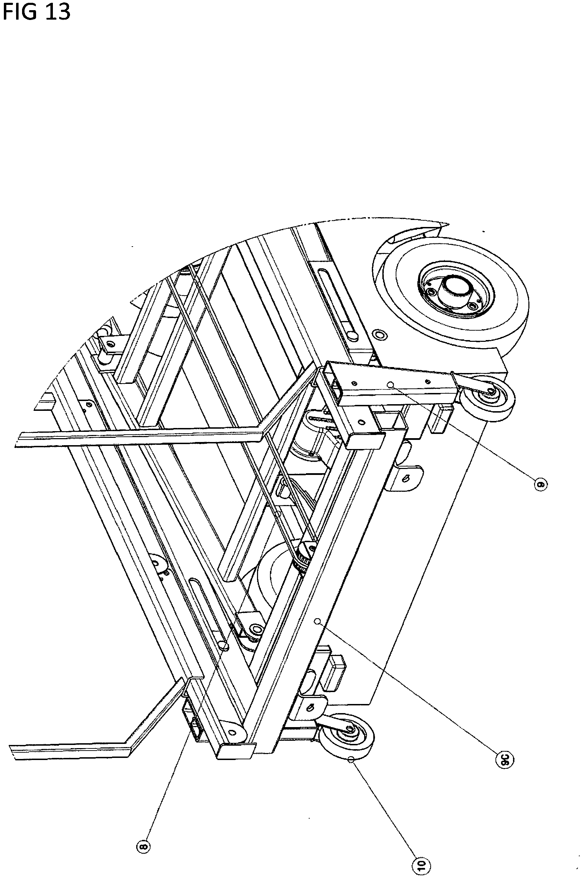

Le plateau 2 est déplacé en translation, par exemple, par une roue dentée 7 motorisée engrenant avec une crémaillère 8. Au lieu d'une crémaillère on peut utiliser une courroie dentée (fig 13) ou encore un vérin dont le corps du cylindre serait long ou logerait un ensemble de vérins télescopiques

Pour éviter un effet de basculement lié au déport arrière, les guides du support 5 présentent en leurs extrémités arrière deux jambes 9 télescopiques pourvues d'organe 10 de roulement pour reprendre la charge lorsque les organes de roulement sont en contact avec le sol et éviter de déséquilibrer le véhicule léger lors du transfert de la charge vers l'arrière. Ces jambes sont basculantes figure 2 ou téléscopiques figure 13.

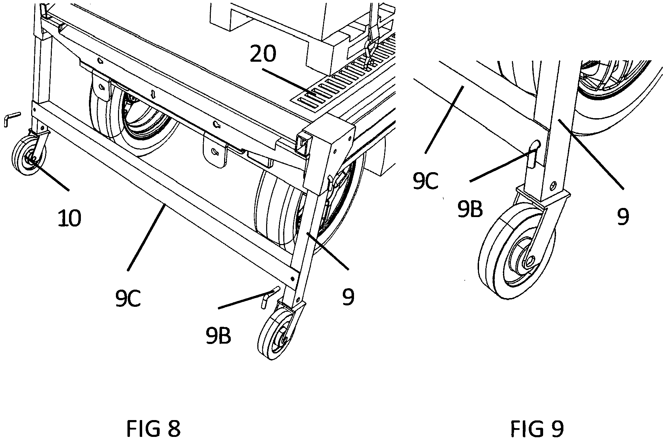

En figure 8 les deux jambes 9 sont reliées par une traverse 9c amovible fixée sur les dites jambes avec un verrou 9B afin de rigidifier les moyens de reprise de charge anti basculement. On notera sur la figure 8 des moyens 20 pour accrocher une sangle de maintien de la marchandise. Il s'agit d'une grille fixée ou intégrée dans le plateau de charge.

Dans une autre forme de réalisation, le plateau 2 est déplaçable manuellement. Selon une autre solution, les jambes 9 sont munies de patin de sorte que les patins en appui au sol immobilisent le support au sol et c'est par déplacement du véhicule vers l'avant que l'on sort le support. Un mécanisme de pilotage du véhicule peut assister le conducteur pour cette opération.

L'effet de basculement est lié au poids à déplacer donc si la charge par rapport au poids du véhicule est faible le risque de basculement est faible. Ce risque de basculement peut être réduit si la répartition de la masse du véhicule est définie pour être située à l'avant du véhicule soit par construction soit par ajout de masse.

La répartition des masses au long de l'axe longitudinal du véhicule non chargé, est fixée pour que le poids à l'avant dudit véhicule soit plus important qu'à l'arrière.

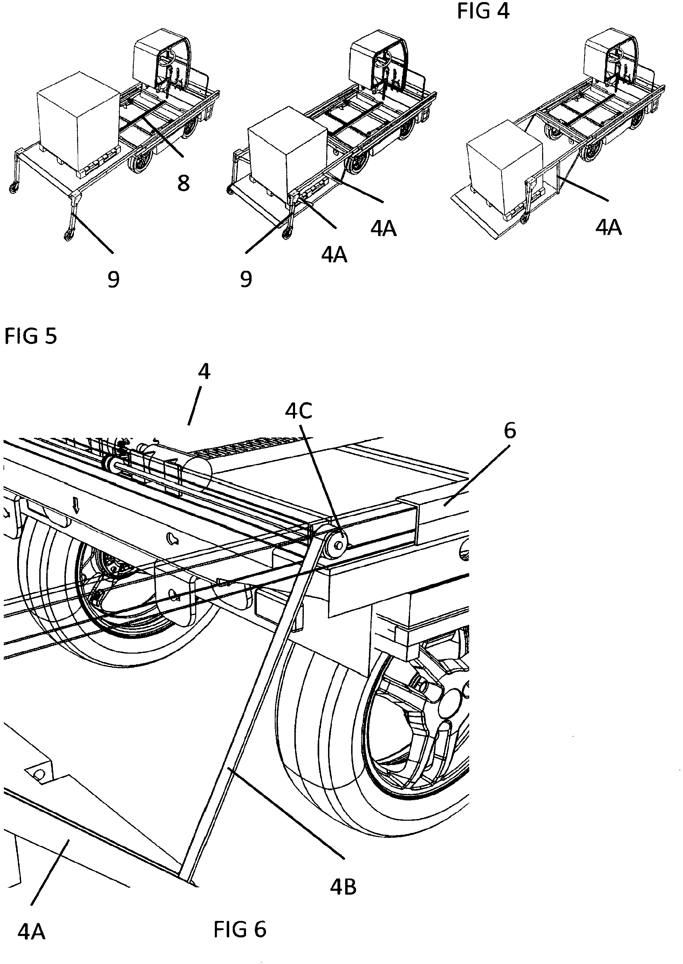

Le plateau est relié au support 3 par des biellettes 4A (figure 5) formant un parallélogramme déformable et des moyens moteurs agissent sur ces biellettes afin de déplacer le plateau entre une position haute et une position basse. Lors de la descente, le mouvement du plateau n'est pas essentiellement vertical mais comporte une composante horizontale. Avant d'être abaissé le bord arrière du plateau se situe sensiblement au niveau des extrémités des guides latéraux et donc au niveau de la reprise de charge par les jambes 9. Après abaissement le bord arrière du plateau se trouve à l'arrière du plan vertical passant par l'extrémité des guides latéraux.

Dans une forme de réalisation, deux des quatre biellettes 4A sont soumises à l'action d'au moins une courroie 4B enroulée sur une poulie 4C ou une chaine enroulée sur un jeu de pignons actionnée en rotation par un moteur. Lorsqu'on déroule la courroie, les biellettes qui sont initialement sensiblement parallèles au plateau de charge, basculent autour d'un axe de rotation situé au niveau du support et amènent progressivement le plateau de charge au sol ou proche du sol.

La charge peut être reprise par un transpalette une fois le plateau à terre .

Le plateau se déplace donc verticalement par la manoeuvre du mécanisme 50 en X, il se déplace horizontalement vers l'arrière et ensuite peut se déplacer verticalement par l'intermédiaire des biellettes.

Le support est formé de trois membrures, l'ensemble des membrures formant un U, l'entrée du U correspondant à l'arrière. L'absence de membrure à l'arrière est nécessaire pour charger et décharger les marchandises. Cependant comme cela a été indiquée, une traverse amovible peut être utilisée pour conserver la géométrie des jambes lorsqu'une charge s'applique dessus.

Ce support sert également à délimiter la zone dangereuse de déplacement des charges.

## Revendications

1. Véhicule de petite taille léger comportant un plateau (2) pour accueillir une charge et un moyen pour amener la charge au sol, ce véhicule étant **caractérisé en ce que** d'une part le plateau (2) est relié au châssis (3) par un support (5) déplaçable verticalement par un système (50) de manoeuvre verticale pour positionner le plateau à la hauteur du plateau d'un camion et d'autre part le plateau (2) est mobile en translation horizontal par rapport au support (5) pour se déplacer entre une première position de transport située au-dessus du châssis du véhicule et une seconde position dite de transfert où le plateau après avoir coulissé vers l'arrière pour se positionner en déport arrière par rapport à la position de transport peut être déplacé vers le sol.

2. Véhicule selon la revendication 1 **caractérisé en ce que** le support (5) est porté par un système de manoeuvre vertical (50) permettant de positionner le plateau à la hauteur du plancher du camion, le dit système de manoeuvre étant constitué par une structure articulé en X avec un moyen moteur

3. Véhicule selon la revendication 1 **caractérisé en ce que** le support (5) porte le plateau (2) qui est guidé en translation sur des guides (6) latéraux télescopique qui s'étendent selon l'axe longitudinal du véhicule.

4. Véhicule selon la revendication 2 **caractérisé en ce que** les guides (6) sont localisés au niveau des bords longitudinaux du véhicule.

5. Véhicule selon la revendication 1 oui 2 **caractérisé en ce que** le plateau est déplacé en translation, par une roue dentée (7) motorisée engrenant avec une crémaillère (8).

6. Véhicule selon la revendication 1 **caractérisé en ce que** le plateau (2) est relié au support (5) par des biellettes (4A) formant un parallélogramme déformable et des moyens moteurs agissent sur ces biellettes afin de déplacer le plateau entre une position haute et une position basse, le déplacement ayant une composante verticale et une composante horizontale.

7. Véhicule selon la revendication 5 **caractérisé en ce que** deux des quatre biellettes sont soumises à l'action d'au moins une courroie (4B) enroulée sur une poulie (4C) actionnée en rotation par un moteur

8. Véhicule selon la revendication 1 ou 6 **caractérisé en ce que** le support est formé de trois membrures, l'ensemble des membrures formant un U, l'entrée du U correspondant à l'arrière.

9. Véhicule selon la revendication 1 **caractérisé en ce que** le support (5) présente en son extrémité arrière deux jambes (9) télescopiques pourvues d'organe (10) de roulement pour reprendre la charge lorsque les organes de roulement sont en contact avec le sol.

10. Véhicule selon la revendication 1 **caractérisé en ce que** le support 5 porte la cabine de conduite qui est ainsi mobile verticalement.
